(19) Europäisches Patentamt
European Patent Office
Office européen des brevets

(11) **EP 4 080 496 A1**

(12) **EUROPEAN PATENT APPLICATION**

(43) Date of publication:
**26.10.2022 Bulletin 2022/43**

(21) Application number: **22168215.6**

(22) Date of filing: **13.04.2022**

(51) International Patent Classification (IPC):
**G09G 3/00** *(2006.01)*

(52) Cooperative Patent Classification (CPC):
**G09G 3/002; G01C 21/365; G02B 27/0101; G09G 3/2003;** G02B 2027/0112; G02B 2027/0118; G09G 2320/0626; G09G 2320/0666; G09G 2360/144; G09G 2380/10

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.04.2021 CN 202110419130**

(71) Applicant: **Apollo Intelligent Connectivity (Beijing) Technology Co., Ltd.**
**Beijing 100176 (CN)**

(72) Inventor: **WU, Junfa**
**Beijing, 100176 (CN)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(54) **CONTROL METHOD AND APPARATUS, DEVICE AND STORAGE MEDIUM**

(57) The present disclosure discloses a control method and apparatus, a device and a storage medium, and relates to the field of computer technologies, and in particular, to technical fields such as intelligent driving, Internet of Vehicles and augmented reality. The control method includes: acquiring an ambient image within a preset range of a projection screen; determining, based on image information of the ambient image, display parameters corresponding to display content, the image information including: image brightness and/or an image color; and controlling the display content to be displayed on the projection screen based on the display parameters. The present disclosure can improve a display effect.

FIG.1

**Description**

**Field of the Disclosure**

The present disclosure relates to the field of computer technologies, specifically to technical fields such as intelligent driving, Internet of Vehicles and augmented reality, and in particular, to a control method and apparatus, a device and a storage medium.

**Background of the Disclosure**

An Augmented Reality Head Up Display (AR-HUD) combines Augmented Reality and Head Up Display technologies to project driving information, such as navigation information, speeds and lanes, onto front windshields of vehicles based on actual traffic conditions and drivers' line of sight regions, so that the drivers always keep facing forward during the driving, thereby improving safety and convenience of the driving. Brightness of the AR-HUD as an optical component affects driving experience to some extent.

In the related art, the brightness of the AR-HUD may be adjusted based on brightness of ambient light obtained by a photosensitive element, or the brightness of the AR-HUD may be adjusted manually.

**Summary of the Disclosure**

The present disclosure provides a control method and apparatus, a device and a storage medium.

According to one aspect of the present disclosure, a control method is provided, including: acquiring an ambient image within a preset range of a projection screen; determining, based on image information of the ambient image, display parameters corresponding to display content, the image information including: image brightness and/or an image color; and controlling the display content to be displayed on the projection screen based on the display parameters.

According to another aspect of the present disclosure, a control apparatus is provided, including: an acquisition module configured to acquire an ambient image within a preset range of a projection screen; a determination module configured to determine, based on image information of the ambient image, display parameters corresponding to display content, the image information including: image brightness and/or an image color; and a control module configured to control the display content to be displayed on the projection screen based on the display parameters.

According to another aspect of the present disclosure, an electronic device is provided, including: at least one processor; and a memory in communication connection with the at least one processor; wherein the memory stores instructions executable by the at least one processor, and the instructions are executed by the at least one processor to enable the at least one processor to perform the method as described in any one of the above aspects.

According to another aspect of the present disclosure, a non-transitory computer-readable storage medium storing computer instructions is provided, wherein the computer instructions are configured to cause a computer to perform the method as described in any one of the above aspects.

According to another aspect of the present disclosure, a computer program product including a computer program is provided, wherein, when the computer program is executed by a processor, the method as described in any one of the above aspects is performed.

According to the technical solutions of the present disclosure, a display effect can be improved.

It should be understood that the content described in this part is neither intended to identify key or significant features of the embodiments of the present disclosure, nor intended to limit the scope of the present disclosure. Other features of the present disclosure will be made easier to understand through the following description.

**Brief Description of Drawings**

The accompanying drawings are intended to provide a better understanding of the solutions and do not constitute a limitation on the present disclosure. In the drawings,

FIG. 1 is a schematic diagram of a first embodiment according to the present disclosure;
FIG. 2 is a schematic diagram of a second embodiment according to the present disclosure;
FIG. 3 is a schematic diagram of a third embodiment according to the present disclosure;
FIG. 4 is a schematic diagram of a fourth embodiment according to the present disclosure;
FIG. 5 is a schematic diagram of a fifth embodiment according to the present disclosure; and
FIG. 6 is a schematic diagram of an electronic device configured to perform any one of the control methods according to embodiments of the present disclosure.

**Detailed Description of Preferred Embodiments**

Exemplary embodiments of the present disclosure are illustrated below with reference to the accompanying drawings, which include various details of the present disclosure to facilitate understanding and should be considered only as exemplary. Therefore, those of ordinary skill in the art should be aware that various changes and modifications can be made to the embodiments described herein without departing from the scope and spirit of the present disclosure. Similarly, for clarity and simplicity, descriptions of well-known functions and structures are omitted in the following description.

In the related art, when the brightness of the AR-HUD is adjusted, the brightness may be adjusted by using a photosensitive element based on brightness of ambient light sensed by the photosensitive element. However, the solution requires the mounting of an additional hardware photosensitive element, which increases costs, and the photosensitive element is susceptible to weather conditions, affecting a display effect. In addition, the brightness of the AR-HUD may be manually adjusted, but manual operation is not convenient, which may reduce the user experience. Moreover, manual operation is limited by manual experience and the display effect is not ideal. In order to improve the display effect, the present disclosure provides the following embodiments.

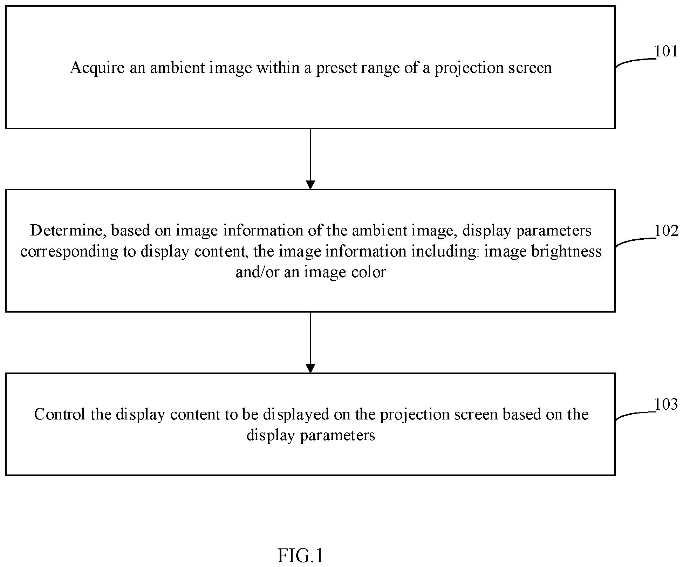

FIG. 1 is a schematic diagram of a first embodiment according to the present disclosure. The embodiment provides a control method, including:

> In 101, an ambient image within a preset range of a projection screen is acquired.
> In 102, display parameters corresponding to display content are determined based on image information of the ambient image, the image information including: image brightness and/or an image color.
> In 103, the display content is controlled to be displayed on the projection screen based on the display parameters.

The embodiment of the present disclosure may be applied to AR scenarios. In such AR scenarios, an AR device may combine a real environment with virtual information.

Taking the AR-HUD as an example, a projection screen refers to a front windshield of a vehicle. A driver may see a road ahead in the real environment through the front windshield during the driving. A camera may be mounted on the vehicle to capture road images in real time while the vehicle is driving. After the road images are obtained, the road images may be processed to extract image information of the road images.

The display parameters may include one or more of display brightness, transparency and a display mode. The display mode may include a display color, and may specifically include a font color. The display mode may also include information such as picture styles and texture.

One or more of the display brightness, the transparency and the display color may be determined based on the image brightness. The display brightness, the transparency and brightness corresponding to the display color are all positively correlated with the image brightness. Taking the display brightness as an example, the greater the image brightness, the greater the display brightness. Specifically, a conversion relationship between brightness proportion parameters and image brightness may be pre-configured, and a brightness proportion parameter may be determined based on the conversion relationship and image brightness. A display device then generates corresponding hardware brightness based on the brightness proportion parameter. The brightness proportion parameter has a value ranging from 0 to 1. For example, the brightness proportion parameter is 0.5, a brightness range of the display device is 0-A. A may vary according to different display devices, so the actual brightness of the display device is 0.5*A. The conversion relationship may be as follows:

$$\begin{cases} L = \dfrac{G - Gc}{Gmax - Gc} * (1 - Lc) + Lc & if\ G > Gc \\ L = \dfrac{Gc - G}{Gc} * Lc & if\ G \le Gc \end{cases}$$

where L denotes the brightness proportion parameter, G denotes the image brightness, *Gmax* denotes maximum brightness, such as 255, *Gc* and *Lc* are preset values, Gc is a value ranging from 0 to 255, and *Lc* is a value ranging from 0 to 1.

The image brightness is taken as a grayscale value. Assuming that a grayscale value 255 represents white and corresponding brightness is the brightest and that the display color is an RGB color, the closer the image brightness is to 255, the closer the values in RGB channels of the display color are to 255. Specifically, the display color may have an initial value, for example, set by a user. Then, when the image brightness is detected, for example, initial image brightness may be acquired, and then current image brightness is acquired. If a grayscale value corresponding to the current image brightness is greater than that corresponding to the initial image brightness, it indicates that the image brightness has become brighter, and the value in at least one of the RGB channels may be increased by a preset change value.

The display brightness, the transparency and the display color are positively correlated with the image brightness, so that the display effect is close to a real situation, thereby improving the display effect.

A display mode of the display content may be determined based on the image color. The display mode may include a display color. The display color includes, for example, a font color of text in the driving information. A color difference between the display color and the image color is greater than a preset value. For example, if the image color is white, the font color is black. If the image color is black, the font color is white. In an example, both the display color and the image color are an RGB color. Assuming that the display color is represented as (R1, G1, B1) and the image color is represented as (R2, G2, B2), the color difference A may be calculated using the following formula:

$$A = \sqrt{(R1 - R2)^2 + (G1 - G2)^2 + (B1 - B2)^2}$$ .

For example, a correspondence between font colors and image colors may be pre-configured, so as to determine a font color corresponding to an image color according to the correspondence. Further, the display mode may further include other information. For example, the display content may include a picture. Then, corresponding to different display modes, the picture included in the display content may have different picture styles, or the display content may have different texture features under different display modes. Font colors, picture styles, texture features and the like under different display modes may be pre-configured, and a correspondence between image colors and display modes, so as to determine a corresponding display mode based on an image color.

A font color different from an image color is used based on the image color, so that the display content is more highlighted, thereby improving the display effect. In addition, the display mode is determined based on the image color, and the display mode includes not only a font color but also a picture style, a texture feature and the like, so that the display mode has more comprehensive information, thereby further improving the display effect.

The display content refers to information displayed by the display device. For example, corresponding to the AR-HUD, the display content is driving information displayed by the AR-HUD. The driving information may be projected onto the front windshield of the vehicle for the driver to view. The driving information includes, for example, speeds, navigation information, and the like.

Taking the AR-HUD as an example, the ambient image is a road image collected by a camera mounted on a vehicle where the AR-HUD is located, the image color is a road color of a road included in the road image, the display content is driving information, the projection screen is a front windshield of the vehicle, and if the image information includes the image brightness and the road color and the display parameters include a display color and display brightness, the step of controlling the display content to be displayed on the projection screen based on the display parameters includes: controlling the AR-HUD to generate driving information with a display color corresponding to the road color; and controlling the AR-HUD to use display brightness corresponding to the image brightness to display the driving information on the front windshield, for example, to project driving information onto the front windshield.

The control over the AR-HUD enables the AR-HUD to adjust the display parameters adaptively.

Taking the AR-HUD as an example, it may be understood that the method according to this embodiment may also be applied to other AR scenarios. For example, the AR device is AR glasses, and the projection screen may be lenses of the AR glasses. At least part of the lenses of AR glasses are transparent, and a user may see a real environment through the transparent parts of the lenses. In addition, the AR glasses may also project to-be-displayed display content onto the lenses of the AR glasses for the user to view. For example, when the user visits a museum, the AR glasses may project information about cultural relics as display content.

In this embodiment, the display parameters of the display content are determined based on image information of the ambient image, which may prevent the problems that the photosensitive element is susceptible to the weather and manual adjustment is susceptible to the limitation of manual experience, thereby improving the display effect.

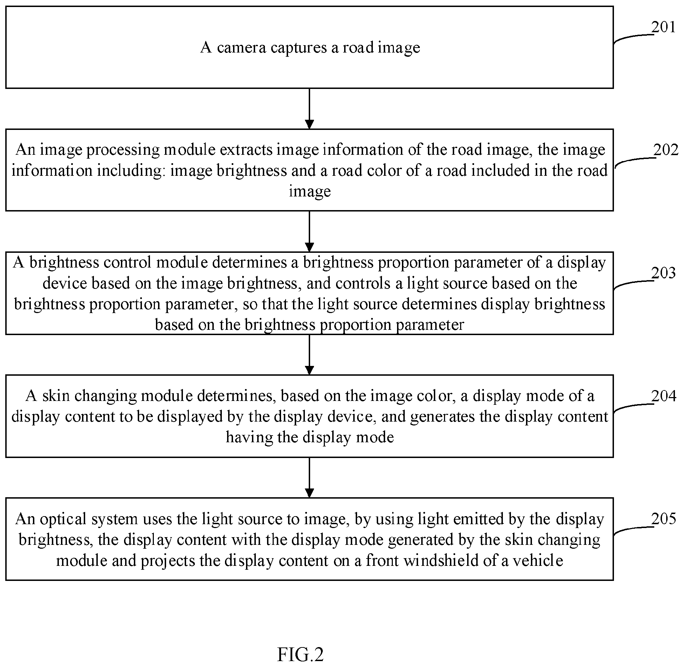

FIG. 2 is a schematic diagram of a second embodiment according to the present disclosure. This embodiment provides a control method. In this embodiment, for example, the display device is an AR-HUD, and the image information includes image brightness and a road color.

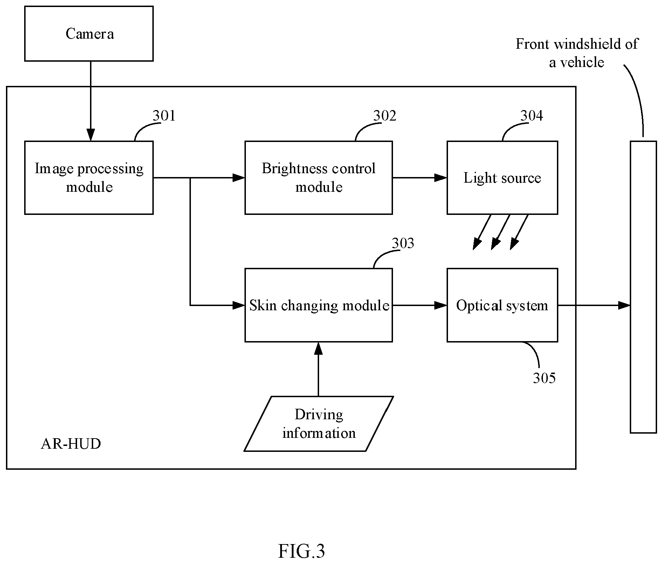

FIG. 3 is a schematic structural diagram of a display system corresponding to FIG. 2. As shown in FIG. 3, the display system may include: a camera, an AR-HUD and a front windshield of a vehicle. The AR-HUD may include: an image processing module 301, a brightness control module 302, a skin changing module 303, a light source 304 and an optical system 305.

The camera is configured to capture a road image and transmit the road image to the image processing module 301. The image processing module 301 extracts image brightness and a road color of the road image, transmits the image brightness to the brightness control module 302, and transmits the road color to the skin changing module 303. The brightness control module 302 determines display brightness of the AR-HUD based on the image brightness, and controls the AR-HUD to display with the determined display brightness. For example, the light source 304 in the AR-HUD may be controlled to emit light based on luminance power corresponding to the display brightness. The skin changing module 303 determines a display mode of display content based on the road color, so that the display content after processing has the determined display mode. For example, if the determined display mode indicates that the font color is blue, a font color in the display content is adjusted to blue, or if the determined display mode indicates that the font color is white, the font color in the display content is adjusted to white. The optical system 305 may perform, according to an existing optical imaging principle, optical imaging on the display content with a specific display mode generated by the skin changing module, and project the generated optical image onto the front windshield of the vehicle.

Referring to FIG. 2 together with FIG. 3, the method according to this embodiment includes the following steps.

In 201, a camera captures a road image.

In 202, an image processing module extracts image information of the road image, the image information including: image brightness and a road color of a road included in the road image.

In 203, a brightness control module determines a brightness proportion parameter of a display device based on the image brightness, and controls a light source based on the brightness proportion parameter, so that the light source determines display brightness based on the brightness proportion parameter.

For example, the brightness proportion parameter is determined according to the conversion relationship between image brightness and brightness proportion parameters, which is assumed to be 0.5, and then the light source emits light at 0.5 times the maximum power.

In 204, a skin changing module determines a display mode of a display content based on the image color, and generates the display content having the display mode.

In 205, an optical system uses the light source to image, by using light emitted by the display brightness, the display content with the display mode generated by the skin changing module and projects the display content on a front windshield of a vehicle.

When processing the road image, the image processing module may acquire a grayscale image corresponding to the road image, determine a grayscale value of the grayscale image, and determine the grayscale value as the image brightness.

If the image captured by the camera is a grayscale image, the acquired grayscale image corresponding to the road image is the road image captured by the camera; or if the image captured by the camera is not a grayscale image, but is, for example, an RGB image, the road image may be first converted to the grayscale image, so as to acquire the grayscale image corresponding to the road image. The grayscale image may be converted by using a variety of existing technologies.

After the grayscale image corresponding to the road image is acquired, the grayscale value of the grayscale image may be determined as the image brightness. Specifically, the grayscale value of the grayscale image may be calculated according to grayscale values of pixels in the grayscale image. When the grayscale value of the grayscale image is calculated according to the grayscale values of the pixels, a certain pixel of the grayscale image corresponding to the road image may be selected, and a grayscale value of the selected pixel is taken as the grayscale value of the grayscale image. The selected pixel is, for example, a central point of the grayscale image corresponding to the road image. Alternatively, a certain region in the grayscale image corresponding to the road image may be selected, an average value of grayscale values of pixels in the region is calculated, and the average value is taken as the grayscale value of the grayscale image. The selected region may be all or part of the region of the grayscale image corresponding to the road image. The pixel or region specifically selected may be determined according to an actual requirement.

Further, the grayscale value may be a value ranging from 0 to 255, or the grayscale value may be a normalized value. That is, values ranging from 0 to 255 are normalized to values ranging from 0 to 1, which may be specifically obtained by dividing the values ranging from 0 to 255 by 255. The higher the grayscale value, the greater the image brightness.

The grayscale value is taken as the image brightness, which may improve operation efficiency of the image brightness.

Generally, the road image captured by the camera is a color image, such as an RGB image. Therefore, a road color may be obtained by extracting a color of the RGB image. Specifically, a road region in the road image may be identified, a certain pixel in the road region is selected, and a color value of the pixel is taken as the road color. Alternatively, some pixels in the road region are selected, an average color value of the pixels is calculated, for example, a mean is calculated according to RGB channels respectively to obtain an average color value, and the average color value is taken as the road color. The road color is, for example, white, gray, red, green, or the like. Alternatively, if the road image captured by the camera is a grayscale image, a grayscale value of the grayscale image may be taken as the road color.

After the image brightness and the road color of the road image are acquired, processing may be performed based on such two pieces of image information.

The brightness control module, after acquiring the image brightness, may determine a brightness proportion parameter of the display device based on the image brightness. In an example, the image brightness is a grayscale value. A conversion relationship between image brightness $G$ and brightness proportion parameters $L$ may be pre-configured in the brightness control module. The conversion relationship is as shown in the above embodiment. The brightness proportion parameter may be determined based on the conversion relationship.

The brightness control module, after determining the display brightness, may control the light source based on the brightness proportion parameter. For example, the brightness control module may send the brightness proportion parameter to a hardware control circuit of the light source. The hardware control circuit may control, according to the brightness proportion parameter, the light source to have the corresponding display brightness. For example, if the maximum display brightness of the light source is A and the brightness proportion parameter is 0.5, the light source emits light at luminance power of 0.5*A.

The skin changing module, after acquiring the road color, may determine a corresponding display mode based on the pre-configured correspondence between road colors and display modes, and generate display content with the display mode. The display mode may include: a font color, a picture format, a texture feature, and the like. The adjustment of the display mode may also be understood as skin changing, which may be implemented by using a relevant skin changing scheme. For example, the display content with the determined display mode may be generated by color modification of elements in the display content and/or Open Graphics Library (OpenGL) rendering. Taking the font color as an example, the font color in the display content is required to be different from the road color. For example, generally, when the road color is dark gray, the font color in the display content may be white. However, when the road color is white on a snowy day, the font color in the display content may be black or blue. A specific correspondence between road colors and font colors may be pre-configured.

After the display brightness and the display mode are determined, the display brightness may be used to display the display content with the display mode, for example, project the display content onto the front windshield of the vehicle.

In this embodiment, the display brightness is determined based on the image brightness, and the display mode is determined based on the road color, which may display the display content having a suitable display mode with suitable display brightness, thereby improving the display effect.

The previous embodiment is illustrated with an example in which the display brightness is determined based on the image brightness and the display mode is determined based on the road color. In some embodiments, processing may also be performed in conjunction with the image brightness and the road color.

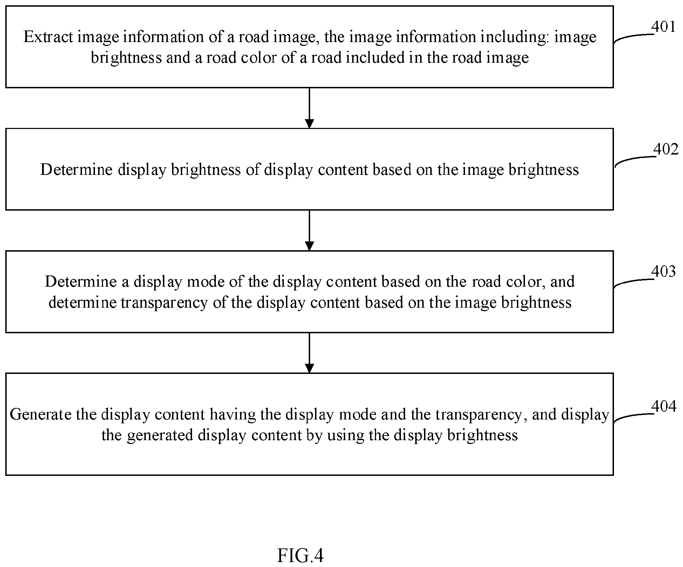

FIG. 4 is a schematic diagram of a fourth embodiment according to the present disclosure. This embodiment provides a control method of a display device. In this embodiment, for example, processing is performed in conjunction with image brightness and a road color. The method according to this embodiment includes the following steps.

In 401, image information of a road image is extracted, the image information including: image brightness and a road color of a road included in the road image.

In 402, display brightness of display content is determined based on the image brightness.

In 403, a display mode of the display content is determined based on the road color, and transparency of the display content is determined based on the image brightness.

A manner of determining the display mode based on the image color may be obtained with reference to the previous embodiment.

The transparency of the display content is determined based on the image brightness, a correspondence between image brightness and transparency may be pre-configured in the skin changing module, and transparency corresponding to the image brightness is determined according to the correspondence. In the correspondence, the image brightness is directly proportional to the transparency. That is, the higher the image brightness, the higher the transparency, and the lower the image brightness, the lower the transparency.

The transparency of the display content is determined based on the image brightness, which may ensure consistency between the display content and a real environment, thereby further improving the display effect.

In 404, the display content having the display mode and the transparency is generated, and the generated display content is displayed by using the display brightness.

In this embodiment, the display brightness and the display mode are adjusted, and the transparency is adjusted based on the image brightness, which may further improve the display effect.

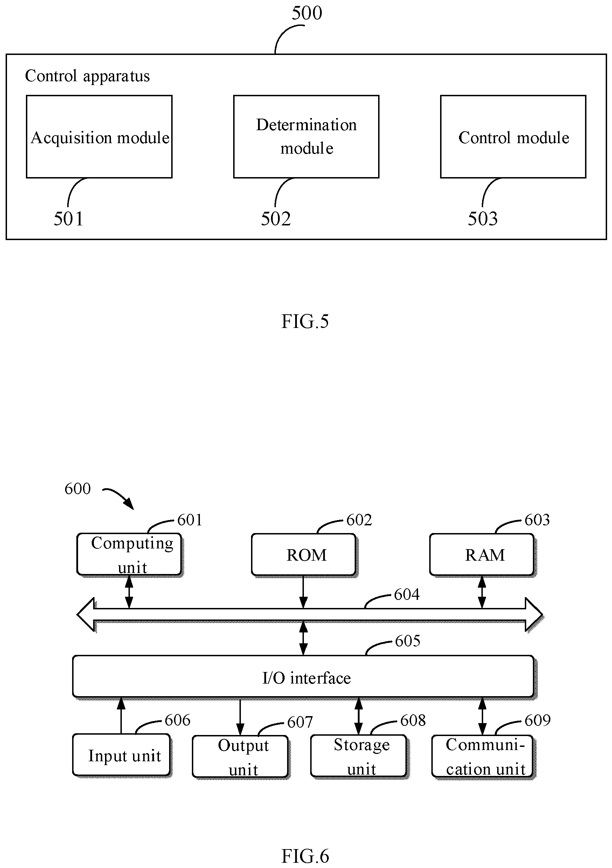

FIG. 5 is a schematic diagram of a fifth embodiment according to the present disclosure. This embodiment provides a control apparatus. As shown in FIG. 5, the control apparatus 500 includes: an acquisition module 501, a determination module 502 and a control module 503.

The acquisition module 501 is configured to acquire an ambient image within a preset range of a projection screen. The determination module 502 is configured to determine, based on image information of the ambient image, display parameters corresponding to display content, the image information including: image brightness and/or an image color. The control module 503 is configured to control the display content to be displayed on the projection screen based on the display parameters.

In some embodiments, if the image information includes the image brightness, the determination module 502 is specifically configured to perform at least one of the following: determining display brightness of the display content based on the image brightness, the display brightness being positively correlated with the image brightness; determining transparency of the display content based on the image brightness, the transparency being positively correlated with the image brightness; and determining a display color of the display content based on the image brightness, the display color being positively correlated with the image brightness.

In some embodiments, if the image information includes the image color, the determination module 502 is specifically configured to: determine a display color of the display content based on the image color, a color difference between the display color and the image color being greater than a preset value.

In some embodiments, if the image information includes the image brightness, the apparatus further includes: an extraction module configured to acquire a grayscale image corresponding to the ambient image; and determine a grayscale value of the grayscale image, and determine the grayscale value as the image brightness.

In some embodiments, the display device is an AR-HUD, the ambient image is a road image collected by a camera mounted on a vehicle where the AR-HUD is located, the image color is a road color of a road included in the road image, the display content is driving information, the projection screen is a front windshield of the vehicle, and if the image information includes the image brightness and the road color and the display parameters include a display color and display brightness, the control module 503 is specifically configured to: control the AR-HUD to generate driving information with a display color corresponding to the road color; and control the AR-HUD to use display brightness corresponding to the image brightness to display the driving information on the front windshield, for example, to project driving information onto the front windshield.

In the embodiment of the present disclosure, the display parameters are determined based on image information of the ambient image, which may prevent the problems that the photosensitive element is susceptible to the weather and manual adjustment is susceptible to the limitation of manual experience, thereby improving the display effect. One or more of the display brightness, the transparency and the display color are positively correlated with the image brightness, so that the display effect is close to a real situation, thereby improving the display effect. A display color different from an image color is used based on the image color, so that the display content is more highlighted, thereby improving the display effect. The grayscale value is taken as the image brightness, which may improve operation efficiency of the image brightness. The control over the AR-HUD enables the AR-HUD to adjust the display parameters adaptively.

It may be understood that the same or similar contents in different embodiments may be referred to each other in the embodiments of the present disclosure.

It may be understood that "first", "second" and the like in the embodiments of the present disclosure are intended only for differentiation, and do not indicate a degree of importance or sequence.

According to embodiments of the present disclosure, the present disclosure further provides an electronic device, a readable storage medium and a computer program product.

FIG. 6 is a schematic block diagram of an exemplary electronic device 600 configured to perform embodiments of the present disclosure. The electronic device is intended to represent various forms of digital computers, such as laptops, desktops, workbenches, personal digital assistants, servers, blade servers, mainframe computers and other suitable computing devices. The electronic device may further represent various forms of mobile devices, such as personal digital assistants, cellular phones, smart phones, wearable devices and other similar computing devices. The components, their connections and relationships, and their functions shown herein are examples only, and are not intended to limit the implementation of the present disclosure as described and/or required herein.

As shown in FIG. 6, the electronic device 600 includes a computing unit 601, which may perform various suitable actions and processing according to a computer program stored in a read-only memory (ROM) 602 or a computer program loaded from a storage unit 608 into a random access memory (RAM) 603. The RAM 603 may also store various programs and data required to operate the electronic device 600. The computing unit 601, the ROM 602 and the RAM 603 are connected to one another by a bus 604. An input/output (I/O) interface 605 is also connected to the bus 604.

A plurality of components in the electronic device 600 are connected to the I/O interface 605, including an input unit 606, such as a keyboard and a mouse; an output unit 607, such as various displays and speakers; a storage unit 608, such as disks and discs; and a communication unit 609, such as a network card, a modem and a wireless communication transceiver. The communication unit 609 allows the electronic device 600 to exchange information/data with other devices over computer networks such as the Internet and/or various telecommunications networks.

The computing unit 601 may be a variety of general-purpose and/or special-purpose processing components with processing and computing capabilities. Some examples of the computing unit 601 include, but are not limited to, a central processing unit (CPU), a graphics processing unit (GPU), various artificial intelligence (AI) computing chips, various computing units that run machine learning model algorithms, a digital signal processor (DSP), and any appropriate processor, controller or microcontroller, etc. The computing unit 601 performs the methods and processing described above, such as the control method. For example, in some embodiments, the control method may be implemented as a computer software program that is tangibly embodied in a machine-readable medium, such as the storage unit 608. In some embodiments, part or all of a computer program may be loaded and/or installed on the electronic device 600 via the ROM 602 and/or the communication unit 609. One or more steps of the control method described above may be performed when the computer program is loaded into the RAM 603 and executed by the computing unit 601. Alternatively, in other embodiments, the computing unit 601 may be configured to perform the control method described in the present disclosure by any other appropriate means (for example, by means of firmware).

Various implementations of the systems and technologies disclosed herein can be realized in a digital electronic circuit system, an integrated circuit system, a field programmable gate array (FPGA), an application-specific integrated circuit (ASIC), an application-specific standard product (ASSP), a system on chip (SOC), a load programmable logic device (CPLD), computer hardware, firmware, software, and/or combinations thereof. Such implementations may include implementation in one or more computer programs that are executable and/or interpretable on a programmable system including at least one programmable processor, which can be special or general purpose, configured to receive data and instructions from a storage system, at least one input apparatus, and at least one output apparatus, and to transmit data and instructions to the storage system, the at least one input apparatus, and the at least one output apparatus.

Program codes configured to implement the methods in the present disclosure may be written in any combination of one or more programming languages. Such program codes may be supplied to a processor or controller of a general-purpose computer, a special-purpose computer, or another programmable data processing apparatus to enable the function/operation specified in the flowchart and/or block diagram to be implemented when the program codes are executed by the processor or controller. The program codes may be executed entirely on a machine, partially on a machine, partially on a machine and partially on a remote machine as a stand-alone package, or entirely on a remote machine or a server.

In the context of the present disclosure, machine-readable media may be tangible media which may include or store programs for use by or in conjunction with an instruction execution system, apparatus or device. The machine-readable media may be machine-readable signal media or machine-readable storage media. The machine-readable media may include, but are not limited to, electronic, magnetic, optical, electromagnetic, infrared, or semiconductor systems, apparatuses or devices, or any suitable combinations thereof. More specific examples of machine-readable storage media may include electrical connections based on one or more wires, a portable computer disk, a hard disk, a random access memory (RAM), a read-only memory (ROM), an erasable programmable read only memory (EPROM or flash memory), an optical fiber, a compact disk read only memory (CD-ROM), an optical storage device, a magnetic storage device, or any suitable combination thereof.

To provide interaction with a user, the systems and technologies described here can be implemented on a computer. The computer has: a display apparatus (e.g., a cathode-ray tube (CRT) or a liquid crystal display (LCD) monitor) for displaying information to the user; and a keyboard and a pointing apparatus (e.g., a mouse or trackball) through which the user may provide input for the computer. Other kinds of apparatuses may also be configured to provide interaction with the user. For example, a feedback provided for the user may be any form of sensory feedback (e.g., visual, auditory, or tactile feedback); and input from the user may be received in any form (including sound input, voice input, or tactile input).

The systems and technologies described herein can be implemented in a computing system including background components (e.g., as a data server), or a computing system including middleware components (e.g., an application server), or a computing system including front-end components (e.g., a user computer with a graphical user interface or web browser through which the user can interact with the implementation mode of the systems and technologies described here), or a computing system including any combination of such background components, middleware components or front-end components. The components of the system can be connected to each other through any form or medium of digital data communication (e.g., a communication network). Examples of the communication network include: a local area network (LAN), a wide area network (WAN) and the Internet.

The computer system may include a client and a server. The client and the server are generally far away from each other and generally interact via the communication network. A relationship between the client and the server is generated through computer programs that run on a corresponding computer and have a client-server relationship with each other. The server may be a cloud server, also known as a cloud computing server or cloud host, which is a host product in the cloud computing service system to solve the problems of difficult management and weak business scalability in the traditional physical host and a virtual private server (VPS). The server may also be a distributed system server, or a server combined with blockchain.

It should be understood that the steps can be reordered, added, or deleted using the various forms of processes shown above. For example, the steps described in the present disclosure may be executed in parallel or sequentially or in different sequences, provided that desired results of the technical solutions disclosed in the present disclosure are achieved, which is not limited herein.

The above specific implementations do not limit the extent of protection of the present disclosure. Those skilled in the art should understand that various modifications, combinations, sub-combinations, and replacements can be made according to design requirements and other factors. Any modifications, equivalent substitutions and improvements made within the spirit and principle of the present disclosure all should be included in the extent of protection of the present disclosure.

**Claims**

1. A control method, **characterized by** comprising:

   acquiring (101) an ambient image within a preset range of a projection screen;
   determining (102), based on image information of the ambient image, display parameters corresponding to display content, the image information comprising: image brightness and/or an image color; and
   controlling (103) the display content to be displayed on the projection screen based on the display parameters.

2. The control method according to claim 1, wherein if the image information comprises the image brightness, the step of determining, based on image information of the ambient image, display parameters corresponding to display content comprises at least one of the following:

   determining display brightness of the display content based on the image brightness, the display brightness being positively correlated with the image brightness;
   determining transparency of the display content based on the image brightness, the transparency being positively correlated with the image brightness; and
   determining a display color of the display content based on the image brightness, the display color being positively correlated with the image brightness.

3. The control method according to claim 1, wherein if the image information comprises the image color, the step of determining, based on image information of the ambient image, display parameters corresponding to display content comprises:
   determining a display color of the display content based on the image color, a color difference between the display color and the image color being greater than a preset value.

4. The control method according to claim 1, wherein if the image information comprises the image brightness, the method further comprises:

   acquiring a grayscale image corresponding to the ambient image; and
   determining a grayscale value of the grayscale image, and determining the grayscale value as the image brightness.

5. The control method according to any one of claims 1-4, wherein the display device is an Augmented Reality Head-Up Display (AR-HUD), the ambient image is a road image collected by a camera mounted on a vehicle where the AR-HUD is located, the image color is a road color of a road comprised in the road image, the display content is driving information, the projection screen is a front windshield of the vehicle, and if the image information comprises the image brightness and the road color and the display parameters comprise a display color and display brightness, the step of controlling the display content to be displayed on the projection screen based on the display parameters comprises:

   controlling the AR-HUD to generate driving information with a display color corresponding to the road color; and
   controlling the AR-HUD to use display brightness corresponding to the image brightness to display the driving information on the front windshield.

6. A control apparatus, **characterized by** comprising:

   an acquisition module (501) configured to acquire an ambient image within a preset range of a projection screen;
   a determination module (502) configured to determine, based on image information of the ambient image, display parameters corresponding to display content, the image information comprising: image brightness and/or an image color; and
   a control module (503) configured to control the display content to be displayed on the projection screen based on the display parameters.

7. The control apparatus according to claim 6, wherein if the image information comprises the image brightness, the determination module (502) is specifically configured to perform at least one of the following:

   determining display brightness of the display content based on the image brightness, the display brightness being positively correlated with the image brightness;

determining transparency of the display content based on the image brightness, the transparency being positively correlated with the image brightness; and

determining a display color of the display content based on the image brightness, the display color being positively correlated with the image brightness.

8. The control apparatus according to claim 6, wherein if the image information comprises the image color, the determination module (502) is specifically configured to:

determine a display color of the display content based on the image color, a color difference between the display color and the image color being greater than a preset value.

9. The control apparatus according to claim 6, wherein if the image information comprises the image brightness, the apparatus further comprises:

an extraction module configured to acquire a grayscale image corresponding to the ambient image; and determine a grayscale value of the grayscale image, and determine the grayscale value as the image brightness.

10. The control apparatus according to any one of claims 6-9, wherein the display device is an Augmented Reality Head Up Display (AR-HUD), the ambient image is a road image collected by a camera mounted on a vehicle where the AR-HUD is located, the image color comprises a road color of a road comprised in the road image, the display content is driving information, the projection screen is a front windshield of the vehicle, and if the image information comprises the image brightness and the road color and the display parameters comprise a display color and display brightness, the control module (503) is specifically configured to:

control the AR-HUD to generate driving information with a display color corresponding to the road color; and

control the AR-HUD to use display brightness corresponding to the image brightness to display the driving information on the front windshield.

11. An electronic device, comprising:

at least one processor; and

a memory in communication connection with the at least one processor; wherein

the memory stores instructions executable by the at least one processor, and the instructions are executed by the at least one processor to enable the at least one processor to perform the method according to any one of claims 1-5.

12. A non-transitory computer-readable storage medium storing computer instructions, wherein the computer instructions are configured to cause a computer to perform the method according to any one of claims 1-5.

13. A computer program product, comprising a computer program, wherein, when the computer program is executed by a processor, the method according to any one of claims 1-5 is performed.

Acquire an ambient image within a preset range of a projection screen —101

Determine, based on image information of the ambient image, display parameters corresponding to display content, the image information including: image brightness and/or an image color —102

Control the display content to be displayed on the projection screen based on the display parameters —103

FIG.1

A camera captures a road image _201

An image processing module extracts image information of the road image, the image information including: image brightness and a road color of a road included in the road image _202

A brightness control module determines a brightness proportion parameter of a display device based on the image brightness, and controls a light source based on the brightness proportion parameter, so that the light source determines display brightness based on the brightness proportion parameter _203

A skin changing module determines, based on the image color, a display mode of a display content to be displayed by the display device, and generates the display content having the display mode _204

An optical system uses the light source to image, by using light emitted by the display brightness, the display content with the display mode generated by the skin changing module and projects the display content on a front windshield of a vehicle _205

FIG.2

FIG.3

Extract image information of a road image, the image information including: image brightness and a road color of a road included in the road image ⟋401

Determine display brightness of display content based on the image brightness ⟋402

Determine a display mode of the display content based on the road color, and determine transparency of the display content based on the image brightness ⟋403

Generate the display content having the display mode and the transparency, and display the generated display content by using the display brightness ⟋404

FIG.4

500

Control apparatus

| Acquisition module | Determination module | Control module |
|---|---|---|

501　　　　　　　　502　　　　　　　　503

FIG.5

600

601 Computing unit

602 ROM

603 RAM

604

605 I/O interface

606 Input unit

607 Output unit

608 Storage unit

609 Communi-cation unit

FIG.6

Europäisches
Patentamt

European
Patent Office

Office européen
des brevets

# EUROPEAN SEARCH REPORT

**Application Number**

EP 22 16 8215

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/109701 A1 (GOLDMAN-SHENHAR CLAUDIA V [IL] ET AL) 21 April 2016 (2016-04-21) * paragraph [0025] - paragraph [0092]; figures 1-3 * | 1-3,5-8, 10-13 | INV. G09G3/00 |
| X | US 2020/234676 A1 (LI DIANMENG [CN]) 23 July 2020 (2020-07-23) * paragraph [0071] - paragraph [0160]; figures 1-4 * | 1-4,6-9, 11-13 | |
| X | EP 3 425 617 A1 (RICOH CO LTD [JP]) 9 January 2019 (2019-01-09) * paragraph [0017] - paragraph [0121]; figures 1-11 * | 1-3,6-8, 11-13 | |

| | |
|---|---|
| | TECHNICAL FIELDS SEARCHED (IPC) |
| | G09G |

The present search report has been drawn up for all claims

| Place of search | Date of completion of the search | Examiner |
|---|---|---|
| Munich | 2 September 2022 | Morris, David |

EPO FORM 1503 03.82 (P04C01)

## ANNEX TO THE EUROPEAN SEARCH REPORT
## ON EUROPEAN PATENT APPLICATION NO.

EP 22 16 8215

02-09-2022

| Patent document cited in search report | | Publication date | Patent family member(s) | | Publication date |
|---|---|---|---|---|---|
| US 2016109701 | A1 | 21-04-2016 | CN | 105527709 A | 27-04-2016 |
| | | | DE | 102015117381 A1 | 21-04-2016 |
| | | | US | 2016109701 A1 | 21-04-2016 |
| US 2020234676 | A1 | 23-07-2020 | CN | 109996052 A | 09-07-2019 |
| | | | US | 2020234676 A1 | 23-07-2020 |
| | | | WO | 2019134590 A1 | 11-07-2019 |
| EP 3425617 | A1 | 09-01-2019 | EP | 3425617 A1 | 09-01-2019 |
| | | | JP | 2019015893 A | 31-01-2019 |

EPO FORM P0459

For more details about this annex : see Official Journal of the European Patent Office, No. 12/82